Europäisches Patentamt

European Patent Office

Office européen des brevets

(11) Veröffentlichungsnummer: **0 445 364 A2**

## (12) EUROPÄISCHE PATENTANMELDUNG

(21) Anmeldenummer: 90121521.0

(22) Anmeldetag: 10.11.90

(51) Int. Cl.5: **H04J 14/02**

(30) Priorität: 07.03.90 DE 4007097

(43) Veröffentlichungstag der Anmeldung:
**11.09.91 Patentblatt 91/37**

(84) Benannte Vertragsstaaten:
**DE FR GB IT**

(71) Anmelder: **Licentia Patent-Verwaltungs-GmbH**
**Theodor-Stern-Kai 1**
**W-6000 Frankfurt/Main 70(DE)**

(72) Erfinder: **Hillerich, Bernd, Dr. Ing.**
**Burgunderweg 9**
**W-7900 Ulm(DE)**

(74) Vertreter: **Amersbach, Werner, Dipl.-Ing. et al**
**Licentia Patent-Verwaltungs-GmbH**
**Theodor-Stern-Kai 1**
**W-6000 Frankfurt 70(DE)**

(54) **Optisches Kommunikationssystem.**

(57) Für ein optisches Kommunikatinssystem mit Wellenlängenmultiplex wird eine optische Verstärkeranordnung vorgeschlagen, bei welcher vor und hinter einem optischen Verstärker je ein Wellenlängenselektiver Koppler angeordnet ist und die zweiten Ausgangs-Lichtwellenleiter der Koppler miteinander verbunden sind. Signalanteile bei der Betriebswellenlänge des Verstärkers werden diesem über die Koppler zugeführt, während Signalanteile bei anderen Wellenlängen über eine Überbrückungsleitung zwischen dem zweiten Ausgängen der Koppler laufen.

FIG.4

EP 0 445 364 A2

Die Erfindung betrifft ein optisches Kommunikationssystem nach dem Oberbegriff des Patentanspruchs 1.

Bei zukünftigen Breitbandkommunikationsnetzen mit einer Mehrzahl von Teilnehmerstationen sollen neben Telefonverbindungen weitere vermittelte digitale Kommunikationsdienste bidirektional über einen Monomode-Lichtwellenleiter übertragen werden. Darüberhinaus ist die Verteilung von Fernsehkanälen über Monomode-Lichtwellenleiter vorgesehen. Aus Kostengründen ist es sinnvoll, sämtliche Signale über einen gemeinsamen Lichtwellenleiter zu übertragen, wobei das Netzwerk zweckmäßigerweise eine Baumstruktur aufweist. Damit eine

Signalqualität mit ausreichendem Stör-Abstand sichergestellt ist, erfolgt die Übertragung auf mindestens zwei verschiedenen Wellenlängen mit einem Abstand von z.B. 200nm (Wellenlängenmultiplex). Ein derartiges Kommunikationssystem ist beispielsweise beschrieben in dem Aufsatz "Passive fibre local loop for telephony with broadband upgrade" von K.A. Oakley et.al., Proc. ISSLS '88, Boston (USA), S. 179-183.

Bei den vermittelten digitalen Telekommunikationsdiensten erlauben optische Sende- und Empfangselemente (Laserdioden bzw. Photodioden) in verfügbarer Technik, daß die Kopfstation eines Netzwerks eine Vielzahl (bis über 200) Teilnehmerstellen bedient. Dies entspricht einer maximalen optischen Systemdämpfung von nicht mehr als 28 dB (Aufteilverluste + 5 dB Systemreserve). Bei der Verteilung von Fernsehsignalen in Restseitenband-Amplitudenmodulation (RSB-AM) ist hingegen wegen des erforderlichen hohen Signal-Störabstands lediglich eine Systemdämpfung von 5-13 dB zulässig, so daß die bei der Verteilung von Fernsehsignalen mögliche Anzahl von Teilnehmerstationen an einem Verteilnetz wesentlich geringer ist.

Aus IEEE Photonics Technology Letters Vol.1, No.10, 1989, S.343-345 ist zur Erhöhung der möglicher Teilnehmerzahl an einem Fernseh-Verteilernetz der Einsatz optischer Verstärker, die in einen optischer Lichtwellenleiter eingefügt sind, vorgeschlagen. Im einzelnen beschrieben ist eine von einem separaten Laser gepumpte Erbium-dotierte Faser als optischer Verstärker.

Optische Verstärker können zwar bidirektional betrieben werden, für den Einsatz eines solchen Verstärkers in einem eingangs beschriebenen Netz ergeben sich aber einige wesentliche Probleme:

- die im Multiplex-Betrieb, insbesondere bei bidirektionaler Übertragung zwangsläufig auftretenden zusätzlichen Signale im optischen Verstärker beeinträchtigen dessen maximale Aussteuerbarkeit und verschlechtern den Signal-Stör-Abstand erheblich;
- der bei optischer Verstärkern nutzbare Spektralbereich beträgt nur 10 bis 30 nm, was einem aus Gründen der Störsicherheit anzustrebenden größeren Abstand der Multiplex-Wellenlängen entgegensteht;
- teilweise erfordern die optischen Verstärker eingangs- und/oder ausgangsseitig optische Isolatoren (= Einwegleitungen), die einen bidirektionalen Betrieb grundsätzlich ausschließen.

Aufgabe der vorliegenden Erfindung ist es, ein optisches Kommunikationssystem anzugeben, das für Wellenlängenmultiplex, insbesondere für bidirektionalen Datenverkehr geeignet ist und dabei auch für RSB-AM Fernsehsignale oder dergleichen hohe Teilnehmerzahlen zuläßt.

Die Erfindung ist im Patentanspruch 1 beschrieben, die Unteransprüche enthalten vorteilhafte Ausgestaltungen und Weiterbildungen der Erfindung.

Die Erfindung ermöglicht auf vorteilhafte Weise den Einsatz der an sich bekannten optischen Verstärker in einem Kommunikationssystem, insbesondere auch mit bidirektionalem Datenverkehr, ohne die erwähnten Probleme aufzuwerfen, da der bzw. die Verstärker nur schmalbandig für eine Signalart wirksam werden, insbesondere in dem beispielhaft beschriebenen System für die RSB-AM Fernsehsignale. Als optische Verstärker können sowohl Halbleiterlaser-Verstärker als auch die bereits beschriebenen lasergepumpten dotierten Fasern vorteilhaften Einsatz finden.

Die Erfindung ist nachfolgend anhand von Beispielen unter Bezugnahme auf die Abbildungen noch eingehend veranschaulicht. Dabei zeigt:

FIG. 1:    ein bekanntes bidirektionales Kommunikationssystem mit Wellenlängenmultiplex;

FIG. 2:    ein Verteilernetz mit optischen Verstärkern

FIG. 3:    das Prinzip eines optischen Faserverstärkers;

FIG. 4:    eine Anordnung mit einem optischen Verstärker gemäß der Erfindung;

FIG. 5:    eine Anordnung mit zwei optischen Verstärkern;

FIG. 6:    ein Kommunikationssystem mit Verstärkeranordnungen nach FIG. 4 mit zentraler Pumpleistungserzeugung;

FIG. 7    ein Kommunikationssystem mit kaskadierten Verstärkeranordnungen mit lokaler Pumpleistungserzeugung.

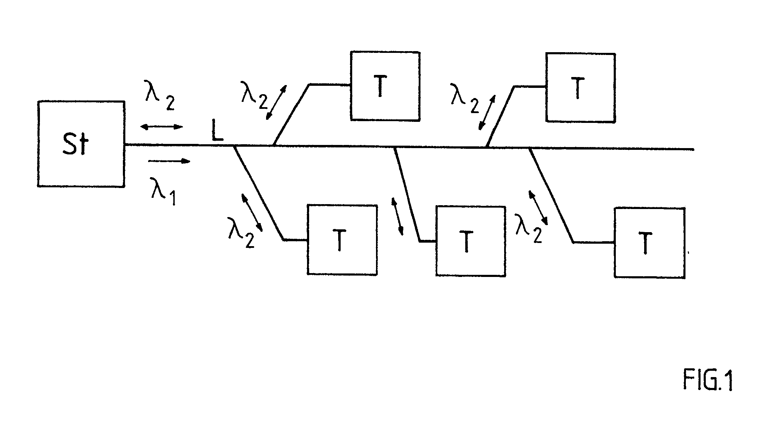

Das optische Kommunikationssystem nach FIG. 1 weist eine Baumstruktur mit einer Kopfstation St und mehreren Teilnehmerstationen T auf. Die Teilnehmer sind mit der Kopfstation über einen Monomode-Lichtwellenleiter L als Stammleitung und weiteren an Kopplern davon abzweigenden Monomode-Lichtwellenleitern verbunden. Es sind

zwei Betriebswellenlängen $\lambda_1$ und $\lambda_2$ vorgesehen, so daß im Wellenlängenmultiplex z.B. auf der Wellenlänge $\lambda_1$ Fernsehsignale von der Kopfstation an die Teilnehmer verteilt und gleichzeitig auf der Wellenlänge $\lambda_2$ bidirektionale Daten zwischen Kopfstation und Teilnehmern ausgetauscht werden können. Wegen des bei der Fernsehsignalverteilung erforderlichen hohen Signal-Störabstands können nur wenige Teilnehmer (2 - 6) an das System angeschlossen werden.

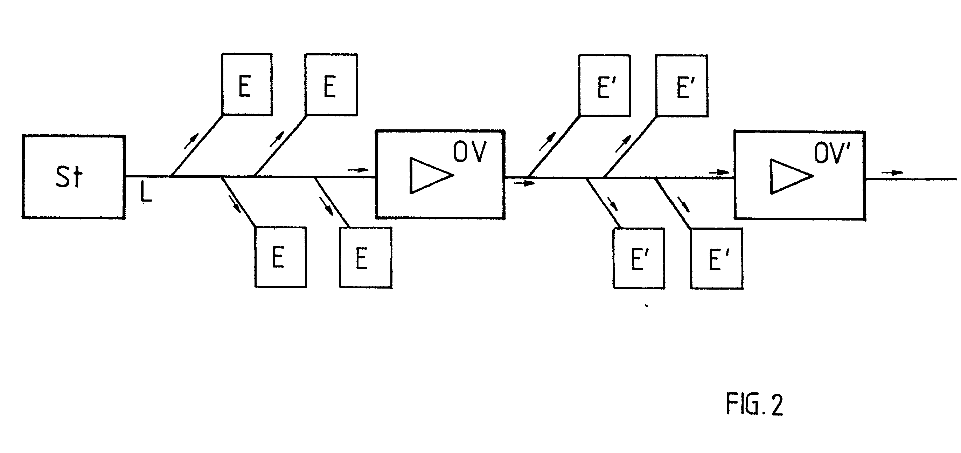

Bei dem reinen Verteilernetz für z.B. Fernsehsignale nach FIG. 2 werden von der Kopfstation St ausgehende optische Signale auf die Empfänger E nur weniger Teilnehmerstationen verteilt und einem optischen Verstärker OV zugeführt. Das Ausgangssignal dieses Verstärkers speist wiederum die Empfänger E' einiger weiterer Teilnehmer und einen weiteren optischer Verstärker OV' usw.. Durch mehrfachen Einsatz solcher Verstärker läßt sich die Anzahl der von einer Kopfstation aus versorgten Teilnehmerempfänger erheblich steigern. Diese Anordnung läßt aber im Regelfall wegen der bereits geschilderten Probleme keinen zusätzlichen uni- oder bidirektionalen Betrieb zu.

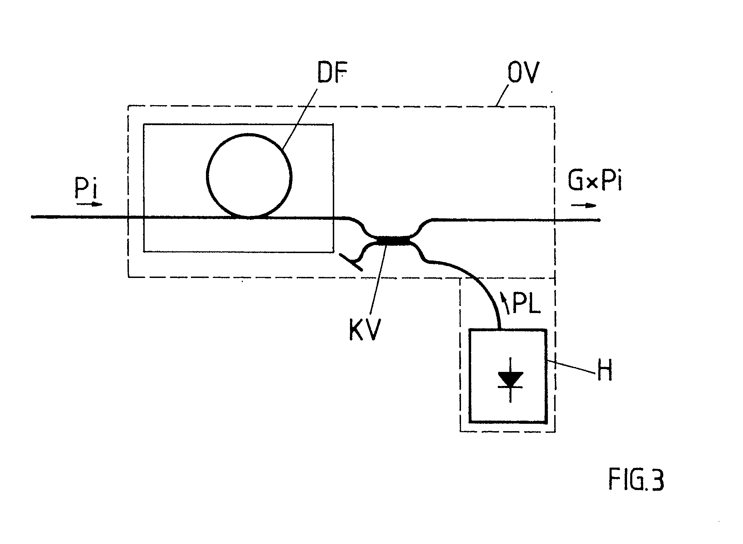

FIG. 3 zeigt den prinzipiellen Aufbau eines eine dotierte Faser DF (Lichtwellenleiter) enthaltenden optischen Verstärkers OV. Der Dotierstoff kann beispielsweise wie bei Stand der Technik Erbium sein. Wesentlich ist, daß eine Pumplichtquelle, z.B. ein Halbleiterlaser H Pumpleistung PL einer unter der Betriebswellenlänge des optischen Verstärkers liegenden Pumpwellenlänge über einen Koppler KV in die dotierte Faser eingespeist. Bei Erbium-dotierten Faserverstärkern liegt die Betriebswellenlänge bei ca. 1.53 $\mu$m. Geeignete Pumpwellenlängen sind 0.98 $\mu$m und 1.49 $\mu$m. Ein mit der Eingangsleistung $P_i$ dem Verstärker zugeführtes optisches Signal verläßt den Verstärker dann mit der um den Verstärkungsfaktor G höheren Leistung $GP_i$.

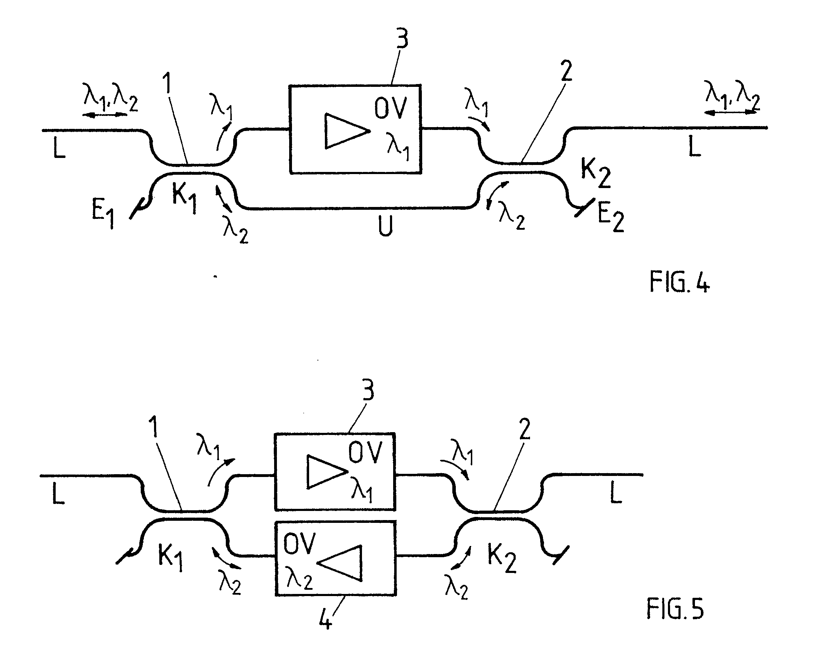

FIG. 4 zeigt als wesentliches Element der vorliegenden Erfindung eine Anordnung mit einem optischen Verstärker OV, der zusammen mit zwei wellenlängenselektiven Kopplern K1 bzw. K2 in den optischen Signalweg eines Lichtwellenleiters L eingefügt ist. Die Betriebswellenlänge des optischen Verstärkers sei $\lambda_1$. Gleichzeitig werden über den Lichtwellenleiter auch noch unidirektional oder bidirektional optische Signale der Wellenlänge $\lambda_2$ übertragen.

Vom Lichtwellenleiter L in Richtung der Verstärkeranordnung laufendes Licht wird in dem in Ausbreitungsrichtung vor dem Verstärker liegenden ersten Koppler, z.B. Koppler K1 wellenlängenselektiv so aufgeteilt, daß Signalanteile der Wellenlänge $\lambda_1$ zum optischen Verstärker 3, Signalanteile der Wellenlänge $\lambda_2$ über den anderen Kopplerausgang auf die Überbrückungsleitung U geführt werden. Die verschiedenen Wellenlängen für Multiplexbetrieb liegen aus Gründen der Störsicherheit soweit auseinander, daß eine Trennung in derartigen Kopplern ohne Probleme möglich ist. Die die Überbrückungsleitung durchlaufenden Signalanteile bei $\lambda_2$ und die im optischen Verstärker verstärkten Signalanteile bei $\lambda_1$ werden in dem anderen Koppler K2 wieder auf den weiterführenden Lichtwellenleiter L zusammengeführt. Reflexionen von den unbenutzten Kopplerausgängen E1, E2 werden durch bekannte Verfahren, z.B. schräge Endflächen der Lichtwellenleiter vermieden.

Ohne Beschränkung der allgemeinen Verwendbarkeit ist im in FIG. 4 skizzierten Beispiel ein unidirektional geführtes, auf Teilnehmerempfänger zu verteilendes Fernsehsignal bei $\lambda_1$ und ein bidirektionales digitales Telefonsignal bei $\lambda_2$ angenommen. Da die optischen Verstärker bidirektional betrieben werden können, kann das Signal bei $\lambda_1$ selbstverständlich auch in Gegenrichtung oder bidirektional sein.

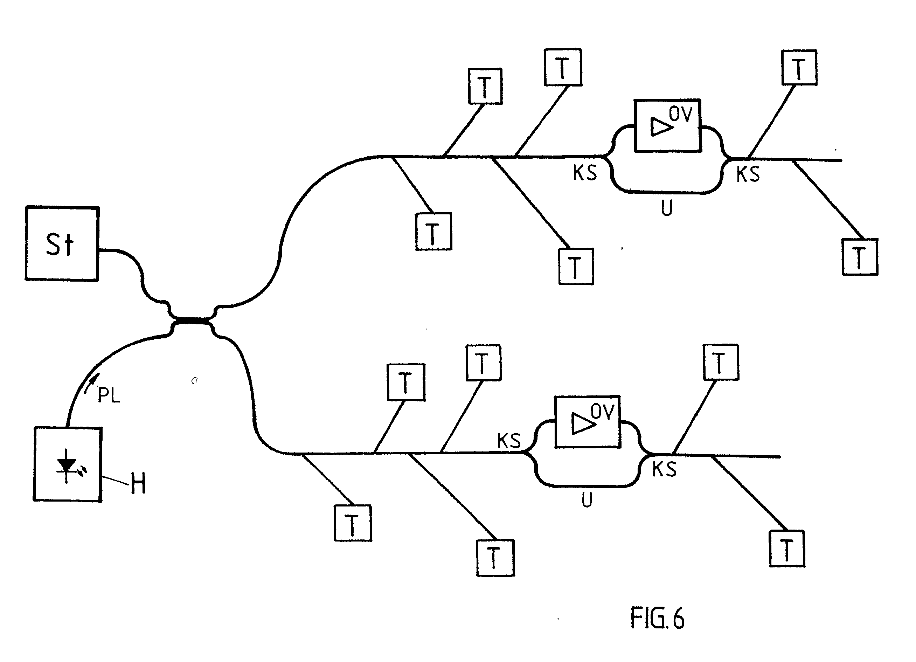

Die Verstärkeranordnung nach FIG. 5 ist demgegenüber dadurch erweitert, daß auch in der Überbrückungsleitung ein weiterer, auf der Wellenlänge $\lambda_2$ arbeitender optischer Verstärker 4 angeordnet ist, so daß auch auf der Wellenlänge $\lambda_2$ verstärkungsbedürftige Signale eingesetzt werden können.

Unter Einsatz geeignet dimensionierter Koppler können für Systeme mit mehr als zwei Betriebswellenlängen Verstärkeranordnungen nach demselben Prinzip aufgebaut werden, wobei jeweils die Signale, die verstärkt werden müssen, von den übrigen Signalen abgetrennt, einzeln über je einen auf die jeweilige Wellenlänge abgestimmten optischen Verstärker geleitet und wieder mit den anderen Signalanteilen zusammengeführt werden.

Um Störungen in den Verstärkerpfaden durch Mehrfachreflexionen an den Kopplern, die über zeitlich verzögerte Nutzsignalanteile den Signal-Störabstand verschlechtern, zu vermeiden, sind besonders reflexionsarme wellenlängenselektive Koppler von besonderer Bedeutung. Solche Koppler mit ausreichend niedrigen Reflexionsfaktoren (< -50 dB) sind nach dem Stand der Technik beispielsweise in Form der bikonischen Schmelzkoppler verfügbar.

FIG. 6 zeigt ein optisches Kommunikationssystem mit einer Kopfstation St und einer Mehrzahl von Teilnehmerstationen T, bei welchem zwei optische Verstärker der in FIG. 3 skizzierten Art vorgesehen sind. Die optische Pumpleistung PL für die optischen Verstärker wird bei der Kopfstation St durch einen Halbleiterlaser H erzeugt und über die auch für die optischen Kommunikationssignale vorgesehenen Monomode-Lichtwellenleiter zu den Verstärkern übertragen. Durch den geringen Abstand von Betriebswellenlänge $\lambda_B$ und Pumpwellenlänge $\lambda_P$ der optischen Verstärker (im Falle Erbium-dotierter Faserverstärker z.B. $\lambda_B$ = 1.53$\mu$m und $\lambda_p$ = 1,49$\mu$m) wird die Pumpleistung von den Wellenlängenselektiven Kopplern KS ohne zusätzliche Maßnahmen den optischen Verstärkern zugeteilt.

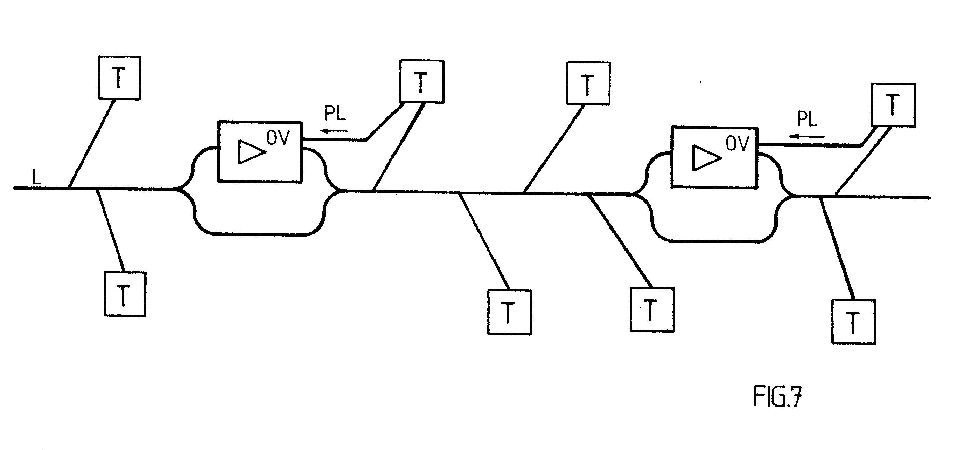

In der FIG. 7 ist ein Ausschnitt aus einem Kommunikationssystem mit kaskadierten optischen Verstärkern wie in FIG. 2 skizziert. Die optische Pumpleistung wird in diesem Beispiel lokal bei einer dem jeweiligen Verstärker nahegelegenen Teilnehmerstation T erzeugt und dem Verstärker über einen separaten Lichtwellenleiter zugeführt.

## Patentansprüche

1. Optisches Kommunikationssystem mit Lichtwellenleitern zur Führung optischer Signale im Wellenlängenmultiplex, dadurch gekennzeichnet, daß mindestens ein optischer Verstärker (3) zwischen zwei wellenlängenselektiven Kopplern (1, 2) in einen Lichtwellenleiter eingefügt ist, wobei die Betriebswellenlänge des optischen Verstärkers auf einer der Multiplex-Wellenlängen liegt und die Koppler Lichtsignale bei anderen Wellenlängen als der Betriebswellenlänge des optischen Verstärkers auf einer parallel zum optischen Verstärker zwischen den beiden Kopplern verlaufenden Überbrückungsleitung führen.

2. System nach Anspruch 1, dadurch gekennzeichnet, daß die Koppler bikonische Schmelzkoppler sind.

3. System nach Anspruch 1, dadurch gekennzeichnet, daß mehr als zwei Wellenlängen im Multiplex vorgesehen sind.

4. System nach einem der Ansprüche 1 bis 3, dadurch gekennzeichnet, daß die Koppler bikonische Schmelzkoppler sind.

5. System nach einer der Ansprüche 1 bis 4, gekennzeichnet durch die mehrfache, auch kaskadierte Anordnung optischer Verstärker.

6. System nach einer der Ansprüche 1 bis 5, dadurch gekennzeichnet, daß eine Kopfstation und eine Mehrzahl von Teilnehmerstationen über ein Lichtwellenleiternetz mit Baumstruktur verbunden sind.

7. System nach einem der Ansprüche 1 bis 4, gekennzeichnet durch Halbleiterlaserverstärker als optische Verstärker.

8. System nach einem der Ansprüche 1 bis 6, gekennzeichnet durch gepumpte Faserverstärker als optische Verstärker.

9. System nach Anspruch 6 und 8, dadurch gekennzeichnet, daß die Pumpleistung von der Kopfstation aus übertragen wird.

10. System nach Anspruch 6 und 8, dadurch gekennzeichnet, daß die Pumpleistung von einer dem Verstärker nahegelegenen Teilnehmerstation übertragen wird.

11. System nach Anspruch 9 oder 10, dadurch gekennzeichnet, daß die optische Pumpleistung auf dem Kommunikationslichtwellenleiter übertragen wird.

12. System nach Anspruch 9 oder 10, dadurch gekennzeichnet, daß die optische Pumpleistung auf einem getrennten Lichtwellenleiter übertragen wird.

FIG.1

FIG. 2

FIG.3

EP 0 445 364 A2

FIG. 4

FIG. 5

EP 0 445 364 A2

FIG. 6

FIG.7